(19) **Europäisches Patentamt / European Patent Office / Office européen des brevets**

(11) **EP 4 133 710 B1**

(12) **FASCICULE DE BREVET EUROPEEN**

(45) Date de publication et mention de la délivrance du brevet:
**09.10.2024 Bulletin 2024/41**

(21) Numéro de dépôt: **21715948.2**

(22) Date de dépôt: **10.03.2021**

(51) Classification Internationale des Brevets (IPC):
**H04L 67/12** (2022.01)

(52) Classification Coopérative des Brevets (CPC):
**H04L 67/125; B60H 1/00385; B60H 1/00778; B60H 1/008; B60H 3/06; G08G 1/207; H04L 67/52;** B60H 1/00771

(86) Numéro de dépôt international:
**PCT/FR2021/050403**

(87) Numéro de publication internationale:
**WO 2021/205088 (14.10.2021 Gazette 2021/41)**

(54) **UTILISATION DE VEHICULES ELECTRIQUES OU HYBRIDES POUR LE TRAITEMENT DE L'AIR AMBIANT EN MILIEU URBAIN ET CENTRE DE CONTROLE POUR LA GESTION DE LADITE UTILISATION**

VERWENDUNG VON ELEKTRISCHEN ODER HYBRIDEN FAHRZEUGEN ZUR BEHANDLUNG VON UMGEBUNGSLUFT IN STADTGEBIETEN UND KONTROLLZENTRUM ZUR VERWALTUNG DIESER VERWENDUNG

USE OF ELECTRIC OR HYBRID VEHICLES FOR TREATING AMBIENT AIR IN URBAN AREAS AND CONTROL CENTRE FOR MANAGING SUCH USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2020 FR 2003554**

(43) Date de publication de la demande:
**15.02.2023 Bulletin 2023/07**

(73) Titulaire: **Stellantis Auto SAS 78300 Poissy (FR)**

(72) Inventeurs:
• **PAJOT, Karine**
  **91370 Verrieres Le Buisson (FR)**
• **PINTAT, Bruno**
  **92160 ANTONY (FR)**
• **DUMUR, Denis**
  **78990 ELANCOURT (FR)**
• **BLOKKEEL, Gregory**
  **75013 PARIS 13 (FR)**

(56) Documents cités:
**EP-A1- 3 628 388**

• **HYUNDAI NEWS RELEASE: "Hyundai nexo cleans over 900kg of air during clean driving month", 12 November 2018 (2018-11-12), XP002802096, Retrieved from the Internet <URL:https://www.hyundai.news/eu/model-news/hyundai-nexo-cleans-over-900kg-of-air-during-clean-driving-month/> [retrieved on 20210211]**
• **TONY MARKOVICH: "Hyundai Prophecy EV Concept is a rolling air purifier piloted by joystick", 3 April 2020 (2020-04-03), XP002802097, Retrieved from the Internet <URL:https://www.autoblog.com/2020/04/03/hyundai-prophecy-ev-concept-details-photos-video/#:~:text=Hyundai%20envisions%20a%20car%20like,when%20the%20vehicle%20is%20parked.> [retrieved on 20210211]**

**Description**

L'invention s'applique au domaine de la préservation de l'environnement et, en particulier, de la dépollution de l'air en milieu urbain.

Plus précisément, l'invention concerne un procédé d'utilisation des moyens d'épuration embarqués dans les véhicules électriques ou hybrides rechargeables pour le traitement de l'air ambiant en milieu urbain ainsi qu'un centre de contrôle destiné à gérer l'utilisation d'une flotte desdits véhicules pour la dépollution de l'air.

Il existe déjà des systèmes destinés à améliorer la qualité de l'air en milieu urbain. De tels systèmes sont constitués, par exemple, d'installations fixes (tours, plots routiers, ...) dotés de moyens assurant l'aspiration et la filtration de l'air environnant pour en extraire les particules fines et/ou les polluants gazeux (CO, NOx, ...) avant de refouler l'air épuré à l'extérieur. Le document D1:Hyundai News Release: "Hyundai nexo cleans over 900kg of air during clean driving month",, 12 novembre 2018 (2018-11-12), XP002802096 explique que Hyundai Motor UK s'est associé à l'University College London pour tracer un itinéraire des routes les plus polluées et encombrées de Londres et a organisé une démonstration montrant comment la voiture peut filtrer les particules de l'air.

Ces systèmes sont destinés à traiter la pollution locale et sont surtout efficaces dans les zones de forte pollution comme les intersections où la concentration en polluants dans l'air ambiant est la plus grande, notamment à cause des arrêts et des démarrages incessants des véhicules.

De plus, outre le fait que ces systèmes sont fixes et/ou que leur rayon d'action est limité, leur coût est très significatif et seules les particules fines sont traitées ce qui n'est pas suffisant car il existe dans l'air urbain d'autres composants polluants qu'il est nécessaire d'éliminer.

Par ailleurs, les véhicules automobiles sont généralement équipés de dispositifs embarqués permettant de filtrer l'air ambiant avant de l'introduire dans l'habitacle. De tels dispositifs comme celui décrit dans la demande de brevet EP707989A1, comprennent un ventilateur qui aspire l'air extérieur et qui l'injecte dans un système de filtration couplé avec les moyens de filtration intégrés à la ligne d'échappement.

La demande de brevet EP3484194A2 décrit un dispositif de détection embarqué dans un véhicule et destiné à mesurer la concentration en polluants dans l'air ambiant extérieur. Ce dispositif est associé à des moyens de filtration assurant la séparation de ces polluants avant rejet de l'air filtré et propre dans l'atmosphère. Lorsque la concentration en polluants mesurée dépasse une valeur de consigne, un serveur communique avec les véhicules situés dans la zone pour qu'ils activent leurs moyens de filtration.

La demande de brevet WO2019137822A3 décrit des dispositifs mobiles de filtration de l'air destiné au traitement de la pollution en milieu urbain. Ces dispositifs sont associés à une application logicielle et pilotés par une unité de commande couplée à des unités de surveillance.

Cependant, en milieu urbain et dans le cadre du renforcement des mesures anti-pollution, il devient nécessaire de connaître, heure par heure et à l'échelle de la rue, l'évolution de la qualité de l'air. Cette exigence implique que la présence, la fiabilité et le rendement des moyens de filtration soient assurés de façon continue et permanente.

Or, les dispositifs et les méthodes antérieures ne propose pas, ni ne suggère, de solution pour, à la fois, conserver des capacités satisfaisantes de filtration de l'air au cours du temps face à leur altération progressive et faciliter les opérations de maintenance des moyens de filtration utilisés.

En outre, ces dispositifs antérieurs ne sont pas modulaires et n'offrent pas non plus la possibilité de piloter des moyens de dépollution à distance, ni de les adapter en nombre et en capacité, selon le lieu et le niveau de pollution à traiter.

Dans ce contexte, l'invention propose une solution technique permettant de prendre en compte les lieux de pollution et leur niveau de pollution dans des zones urbaines restreintes pour piloter, de façon distante, automatique et efficace, un traitement local et sélectif de l'air ambiant au moyen des seuls équipements de filtration embarqués dès l'origine dans les véhicules électrifiés présents dans ces zones.

Ce but est atteint, selon l'invention, par l'utilisation d'un véhicule à moteur électrique ou hybride pour le traitement de l'air ambiant, ledit véhicule étant équipé de moyens d'épuration destinés à séparer les polluants par filtration et/ou par adsorption et/ou par séparation catalytique de l'air extérieur introduit dans l'habitacle, caractérisée en ce qu'on détecte, à partir d'un centre de contrôle, une zone urbaine où le niveau de pollution est supérieur ou égal à une valeur de consigne et la présence stationnaire dans cette zone dudit véhicule, on active à distance ses moyens d'épuration embarqués puis on effectue le pilotage desdits moyens et l'analyse de leurs performances en fonction du temps.

Ce but peut aussi être atteint, selon l'invention, par l'utilisation d'un véhicule à moteur hybride pour le traitement de l'air ambiant, ledit véhicule étant équipé de moyens d'épuration destinés à séparer les polluants par filtration et/ou adsorption et/ou catalyse de l'air extérieur introduit dans la ligne d'échappement des émissions du moteur thermique caractérisée en ce qu'on détecte, à partir d'un centre de contrôle, une zone urbaine où le niveau de pollution est supérieur ou égal à une valeur de consigne et la présence stationnaire dans cette zone dudit véhicule, on active à distance ses moyens d'épuration embarqués puis on effectue le pilotage desdits moyens et l'analyse de leurs performances en fonction du temps

Selon une caractéristique avantageuse de l'utilisation selon l'invention, on procède à l'arrêt des moyens d'épuration embarqués lorsque la concentration en polluants dans l'environnement du véhicule descend en dessous de la valeur de consigne.

Selon une autre caractéristique de cette utilisation, il est prévu que, préalablement à l'activation des moyens d'épuration embarqués et pendant leur fonctionnement, on vérifie leur état d'encrassement au regard du niveau de pollution à traiter par ledit véhicule et on bloque leur lancement ou on procède à leur arrêt immédiatement avant leur saturation en polluants.

Selon une variante de mise en oeuvre de cette utilisation, on déclenche une alarme lorsque le niveau d'encrassement des moyens d'épuration par filtration de l'air est supérieur ou égal à 90% de leur charge maximale.

Selon une autre variante de mise en oeuvre, on déclenche une régénération automatique des moyens d'épuration par séparation catalytique lorsque leur niveau de colmatage est compris entre 50% et 90% en fonction du niveau de pollution à traiter et de leur capacité à désorber les polluants.

Selon une variante spécifique, le centre de contrôle est distant et coordonne le traitement de l'air ambiant par une flotte de véhicules répartis sur plusieurs zones urbaines.

Dans ces conditions, le centre de contrôle gère le nombre de véhicules disponibles en fonction du niveau de pollution à traiter et de la quantité de polluants à séparer dans une zone urbaine ciblée afin de pouvoir identifier les véhicules qui pourront être activés lors d'un épisode de pollution imminent.

Selon une autre variante, le centre de contrôle est localisé dans le véhicule.

Selon encore une caractéristique de l'utilisation selon l'invention, il est prévu que, préalablement à l'activation des moyens d'épuration, on vérifie l'état de charge de la batterie du véhicule au regard de la durée de fonctionnement prévisible en fonction du niveau de pollution à traiter et on bloque l'activation des moyens d'épuration et/ou on déclenche une alarme lorsque l'état de charge du véhicule est insuffisant. Cette alarme permet au centre de contrôle d'identifier les véhicules qui ne pourront être activés lors d'un épisode de pollution imminent.

Un autre objet de l'invention est un centre de contrôle distant ou embarqué dans un véhicule pour la gestion d'une utilisation telle que définie ci-dessus, caractérisé en ce qu'il est doté d'un calculateur et de logiciels d'exploitation aptes et destinés à déterminer la masse de polluants accumulés par les moyens d'épuration, et donc leur niveau de saturation, en fonction de leur durée de fonctionnement, des débits d'air traités, des concentrations en polluants dans l'air ambiant et du ratio d'efficacité de ces moyens d'épuration.

L'invention consiste à gérer l'utilisation d'un véhicule ou d'une flotte de véhicules électrifiés (véhicules à motorisation électrique ou véhicules hybrides rechargeables qui sont peu ou très peu polluants), stationnés sur la voie publique en milieu urbain pour piloter à distance leur moyens d'épuration embarqués et séparer ainsi les polluants urbains (NOx, COV, CO, particules...) de l'atmosphère ambiante.

Cette utilisation, détournée selon l'invention, permet de commander à distance l'action dépolluante de ces véhicules, dans des zones ciblées, en fonction du niveau de pollution, que ces véhicules soient stationnés en surface (dans les rues ou dans les parkings) ou en sous-sol.

Ainsi, du fait du grand nombre de véhicules garés dans les rues, il devient possible de disposer localement de moyens diffus de dépollution et d'étendre leur rayon d'action en milieu urbain tout en intensifiant leurs effets.

La mobilité de ces véhicules à fonction dépolluante permet de mieux cibler les zones urbaines à traiter en priorité et d'élargir le spectre des polluants pouvant être traités en saisissant l'opportunité de moyens d'épuration déjà embarqués dans les véhicules.

Cette utilisation est applicable de préférence aux véhicules à motorisation électrique ou aux véhicules à motorisation hybride thermique électrique, celui-ci pouvant être rechargeable, équipés de moyens d'épuration destinés à séparer les polluants par filtration de l'air extérieur introduit dans l'habitacle. Cette utilisation peut aussi être applicable aux véhicules à motorisation hybride hybride thermique électrique, celui-ci pouvant être rechargeable, dotés de moyens d'épuration assurant la séparation catalytique, par adsorption et par filtration des émissions du moteur thermique.

D'autres caractéristiques et avantages de l'invention ressortiront à la lecture de la description qui va suivre, en référence aux dessins annexés et détaillés ci-après.

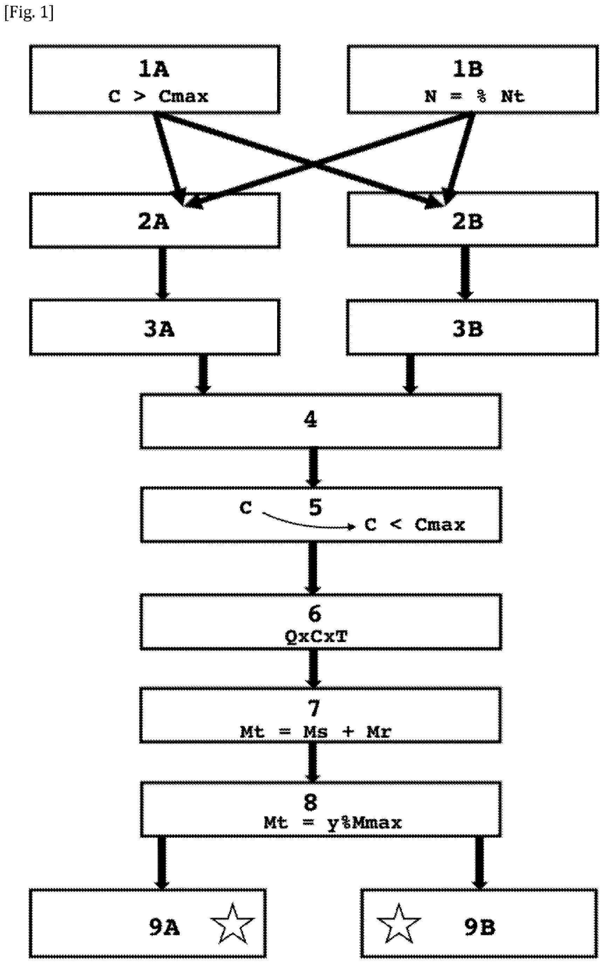

[Fig. 1] est un schéma illustrant un mode de mise en oeuvre préférentiel de l'utilisation de selon l'invention.

Pour plus de clarté, les éléments identiques ou similaires sont repérés par des signes de référence identiques dans la description et sur la figure annexée.

Naturellement, les modes de mise en oeuvre de l'utilisation selon l'invention illustrée par la figure présentée ci-dessus et décrite ci-après, ne sont donnés qu'à titre d'exemples non limitatifs. Il est explicitement prévu que l'on puisse proposer et combiner entre eux différents modes pour en proposer d'autres.

L'invention concerne le domaine du traitement de l'air ambiant en milieu urbain et, plus particulièrement, de l'utilisation de véhicules électriques ou hybrides rechargeable dans un objectif de lutte contre la pollution.

Dans cet objectif, l'invention propose de détourner l'usage des moyens d'épuration équipant ces véhicules lorsque ceux-ci sont stationnés sur la voie publique, en surface ou même dans des parkings souterrains, pour dépolluer l'air environnement.

L'invention s'appuie sur les constatations suivantes. Dans une rue dite « canyon » avec une voie centrale de circulation et des places de stationnement situées de part et d'autre de cette voie, le volume d'air entourant un véhicule est d'environ 65 m³. Ce volume est susceptible de traverser le dispositif d'épuration embarqué en environ 10 min. Toutefois, le dispositif n'étant pas systématiquement efficace à 100%, plusieurs passages peuvent être nécessaires pour supprimer la pollution ambiante, et l'invention prévoit une mise en oeuvre du procédé de dépollution par un véhicule pendant une durée inférieure à une heure.

Bien entendu, les véhicules utilisés dans le cadre de l'invention et, en particulier, leurs moyens d'épuration doivent être dotés d'un système de connexion leur permettant d'être commandés et pilotés à distance depuis un centre de contrôle et d'être activés lors de l'apparition d'un pic de pollution.

Ce centre de contrôle peut lui-même être asservi à l'information de « Qualité de l'Air » dite QA, via les réseaux internet et l'accès à l'informatique en nuage (ou « Cloud »). Cette information, qui est accessible via certaines AASQA en France (par exemple, « AirParif » pour la région Ile-de-France), est orientée sur les classes de polluants (NO₂, PM₁₀, O₃, PM₂.₅, ...) et donne l'indice de qualité de l'air ainsi que son évolution heure par heure, dans une zone urbaine, notamment, à l'échelle de la rue.

Cette information présente deux intérêts. Le premier est de connaître le moment où a lieu ou aura lieu le dépassement du seuil de pollution relativement, par exemple, à des normes Européennes, aux recommandations de l'OMS, .... Le second est d'ordre géographique et permet de savoir dans quelle rue le traitement de dépollution, via une flotte de véhicules stationnés, doit être déployé.

Ainsi, cette information qui est disponible par internet peut être utilisée, soit directement par le centre de contrôle pour effectuer, dans les zones en dépassement de seuil, la mise en route distante des moyens d'épuration de sa flotte captive de véhicules ou des véhicules de particuliers, soit de façon autonome par le véhicule lui-même, soit via des connexions avec des véhicules avoisinants (connexions du type « Car2Car »).

L'invention est applicable de préférence aux véhicules à motorisation électrique ou aux véhicules à motorisation hybride rechargeable équipés de moyens d'épuration destinés à séparer les polluants par filtration et/ou adsorption et/ou catalyse de l'air extérieur introduit dans l'habitacle. L'invention peut aussi être applicable aux véhicules à motorisation hybride rechargeable dotés de moyens d'épuration assurant la séparation catalytique et/ou d'adsorption et/ou de filtration des polluants à partir des émissions du moteur thermique au niveau de la ligne d'échappement (système TWC pour le traitement des NOx, Hydrocarbures et oxydes de carbone CO issus des moteurs à essence ; système GPF de filtres à particules pour les moteurs à essence ; système DOC de traitement des hydrocarbures et du CO des moteurs Diesel ; système SCR et/ou « NOxTrap » pour le piégeage/traitement des NOx ; système DPF de filtres à particules pour moteurs Diesel ; système ASC pour le traitement de l'ammoniac NH3 des moteurs Diesel, ...). En pratique, l'utilisation des moyens d'épuration de la ligne d'échappement reste plus compliquée que l'utilisation des moyens d'épuration de l'air introduit dans l'habitacle.

En effet, ces derniers, bien qu'équipant généralement les moteurs à combustion, peuvent être adaptés de façon connue en elle-même pour adsorber les polluants à des températures inférieures à celles des gaz d'échappement (températures inférieures à 100°C et de préférence inférieures à 50°C).

Comme illustré par la figure 1, le procédé de l'invention consiste, d'abord, à détecter, à partir du centre de contrôle, une zone urbaine où le niveau de pollution est supérieur ou égal à une valeur de consigne ainsi que la présence stationnaire dans cette zone d'au moins un véhicule immobilisé. De préférence, le centre de contrôle coordonne le traitement de l'air ambiant par une flotte de véhicules captifs ou de véhicules de particuliers, répartis sur une ou plusieurs zones urbaines.

Par conséquent, l'efficacité du procédé proposé par l'invention repose, à l'échelle d'une ville, sur le nombre de véhicules détectés par le centre de contrôle et l'enregistrement par un calculateur de leur position de stationnement en relation avec une zone polluée à traiter.

Le centre de contrôle active à distance les moyens d'épuration de l'air embarqués dans les véhicules puis effectue le pilotage de ces moyens d'épuration et l'analyse de leurs performances en fonction du temps.

En fonction de la configuration de la rue, il est possible de prévoir l'heure de retour à la normale, en fonction du ratio de véhicules assurant le traitement d'épuration. En reprenant le même exemple de rue « canyon » cité précédemment, il est démontré que si 25% à 100% des véhicules garés et équipés de moyens d'épuration à filtre combiné (à particules + COV) étaient mis en fonctionnement pour épurer l'atmosphère, alors il faudrait, respectivement, 1 heure et 15 min pour revenir à une situation normale, c'est-à-dire, à une concentration réglementaire de PM10 (particules dont le diamètre est inférieur à 10 μm) dans l'air de 50 μg/m³ en partant d'une situation à 253 μg/m³ de PM10 et 2 heures et 15 min pour respecter les recommandations de l'OMS à à 25 μg/m³ de PM2.5 (particules dont le diamètre est inférieur à 2,5 μm), pour une situation initiale à 193 μg/m³.

Par la suite, et toujours de façon distante, le centre de contrôle procède à l'arrêt des moyens d'épuration embarqués lorsque la concentration en polluants dans l'environnement du véhicule descend en dessous d'une valeur de consigne correspondant, dans la zone considérée, à des critères environnementaux et/ou réglementaires.

Le procédé de l'invention prévoit aussi que, préalablement à l'activation des moyens d'épuration, on vérifie l'état de charge de la batterie du véhicule au regard de la durée de fonctionnement prévisible en fonction du niveau de pollution à traiter. Le cas échéant, si l'état de charge du véhicule se révèle insuffisant, le centre de contrôle peut déclencher une alarme bloquer l'activation des moyens d'épuration et/ou procéder, à distance, à un branchement automatique sur un réseau électrique de proximité en vue d'effectuer une recharge.

En revanche, si le niveau de charge est suffisant, il n'est alors pas nécessaire que le véhicule soit branché sur le réseau d'alimentation électrique pour activer les moyens d'épuration embarqués. Toutefois, il serait possible selon l'invention de prévoir, à partir du centre de contrôle, un suivi du niveau de charge pendant les opérations de dépollution de façon à prévenir d'éventuels problèmes de démarrage ultérieurs du véhicule.

L'activation des moyens d'épuration et leur pilotage à distance, à partir du centre de contrôle, sont effectués en prenant en compte les capacités de filtration propres à chaque véhicule en fonction du temps. Le centre de contrôle assure aussi le suivi continu des performances des moyens d'épuration (débits d'air pollué aspiré, d'air propre refoulé, ...) en évitant l'indisponibilité de ces moyens afin d'optimiser le rendement de dépollution.

En effet, l'état d'encrassement des moyens d'épuration doit être compatible, en toutes circonstances, avec le niveau de pollution à traiter. Dans ces conditions, même en cours de traitement, la quantité de polluants pouvant être encore séparée ou stockée et donc la capacité de traitement des moyens d'épuration, doit être encore supérieure au taux de dépollution assigné au véhicule, en fonction de la zone urbaine considérée.

Ainsi, il est prévu selon le procédé de l'invention que, préalablement à l'activation des moyens d'épuration embarqués et pendant leur fonctionnement, on vérifie leur état d'encrassement au regard du niveau de pollution à traiter par le véhicule. Dans ces conditions, une fois les moyens d'épuration activés, le centre de contrôle peut être amené à procéder à leur arrêt dès saturation en polluants. Il est aussi possible, dans le cadre de l'invention, de déclencher une alarme lorsque le niveau d'encrassement des moyens d'épuration compromet l'efficacité de la suite du traitement.

De même, si les moyens d'épuration d'un véhicule précis sont initialement trop proches de la saturation, ils ne seront pas activés pour éviter que le roulage ultérieur du véhicule n'entraîne des dysfonctionnements du fait de l'indisponibilité de ces moyens. Ainsi, le procédé de l'invention permet d'anticiper un encrassement potentiel et de faire remonter l'information au centre de contrôle et/ou à l'utilisateur du véhicule pour effectuer une maintenance rapide des moyens d'épuration et, le cas échéant, procéder à leur régénération automatique si le véhicule est équipé des moyens appropriés.

Typiquement, lorsque les moyens d'épuration comprennent des organes de filtration de l'air, le procédé de l'invention considère que le taux maximum d'encrassement acceptable est atteint lorsque les filtres sont à 90% de leur charge maximale. Cette valeur sera ajustée en prenant en compte l'état réel ou calculé d'encrassement du filtre, la concentration initiale en polluants et la concentration à atteindre, l'efficacité du filtre, le débit et le temps de fonctionnement.

Lorsque les moyens d'épuration utilisent une séparation catalytique, le procédé de l'invention considère que le niveau de saturation de ces moyens est atteint lorsque leur niveau de colmatage est compris entre 50% et 90% en fonction du niveau de pollution à traiter et de la capacité de ces moyens à désorber les polluants. Dans ce cas, le centre de contrôle peut déclencher leur régénération automatique avant de les réactiver pour poursuivre l'épuration.

Le centre de contrôle utilisé dans le cadre du procédé de l'invention peut être embarqué dans un véhicule ou être installé de façon fixe à distance de la flotte de véhicules. Ce centre de contrôle est doté d'un calculateur et de logiciels d'exploitation apte et destinés à déterminer la masse de polluants accumulés par les moyens d'épuration, et donc leur niveau de saturation, en fonction de leur durée de fonctionnement, des débits d'air traités, des concentrations en polluants dans l'air ambiant et du ratio d'efficacité de ces moyens d'épuration.

Plus précisément, la mesure de la saturation des moyens d'épuration est réalisée de la manière décrite ci-après dans le cas où ces moyens utilisent la filtration de particules polluantes. Toutefois, en première approche, cette méthode de mesure pourrait aussi être transposée aux polluants gazeux.

Une fois que les moyens d'épuration embarqués ont été activés par le centre de contrôle, le calculateur qui lui est associé enregistre la durée de la filtration [temps T en minutes], les débits d'air aspirés depuis l'extérieur du véhicule [Q en m$^3$/h] et les concentrations des particules présentes dans l'air environnant et destinés à être traités [C en $\mu$g/m$^3$].

Connaissant le ratio d'efficacité [R en %] des moyens d'épuration considérés, il est alors possible de déterminer la quantité [masse Ms en g] de particules accumulées sur le filtre en appliquant, pour chaque polluant, l'équation (1) :

$$M = R \times Q \times T \times C \times 10^{-6}.$$

Cette valeur de la quantité du polluant, calculée lorsque le véhicule est immobilisé en stationnement, est ajoutée à la valeur de la quantité estimée [masse Mr en g] de polluant traitée en condition de roulage du véhicule pour obtenir la quantité cumulée (masse Mt en g) de ce polluant, selon l'équation (2) : Mt = Ms + Mr.

Lorsque la quantité cumulée Mc du polluant considéré, à partir d'un filtre neuf, est égale, par exemple, à 90% de la charge maximale du filtre [M$_{max}$], le centre de contrôle peut alors déclencher une alarme et/ou une opération de maintenance du filtre (et/ou du matériau adsorbant) et amener le propriétaire du véhicule ou de la flotte à changer rapidement le filtre embarqué. Si les moyens d'épuration sont destinés à traiter plusieurs polluants (comme, par exemple, les filtres combinés particules et COV), le polluant pris en compte pour le déclenchement de l'alarme est celui qui saturera en premier le filtre.

Dans le cas où les moyens d'épuration comprennent un catalyseur pour adsorber et séparer les polluants (catalyse, photo-catalyse, ...), le résultat Mt du calcul issu de l'équation (2) est comparé à la quantité [Mmax] de polluant correspondant au colmatage du catalyseur.

Si la quantité cumulée Mt du polluant traité par le catalyseur est comprise entre 50% et 90% de la quantité de colmatage Mmax (en fonction notamment, du niveau de pollution environnant, de la facilité de désorber les polluants, ...), le centre de contrôle peut déclencher une alarme et, le cas échéant, lancer une régénération automatique du catalyseur.

La figure 1 illustre les différentes phases pour la mise en oeuvre de l'utilisation des véhicules dépolluants selon l'invention.

Phases 1A et 1B : identification temporelle et géographique d'une zone de pollution où les concentrations en polluants (C) sont supérieures aux valeurs (Cmax) considérées comme admissibles et détermination du nombre (N) de véhicules disponibles (stationnés) pour une action dépolluante dans la zone de pollution identifiée relativement au nombre total de véhicules (Nt) dans la zone ; N = % Nt.

Phases 2A et 2B : information via l'informatique en nuage (« Cloud ») et/ou information du centre de contrôle de la flotte de véhicules captifs.

Phases 3A et 3B : information directe aux véhicules stationnés et connectés dans la zone de pollution ciblée et/ou information aux flottes de véhicules stationnés et connectés dans la zone de pollution ciblée.

Phase 4 : préalablement à la sélection des véhicules à activer, contrôle de l'état de chargement de la batterie de ces véhicules et de l'état d'encrassement de leurs moyens d'épuration.

Phase 5 : activation des moyens d'épuration embarqués dans les véhicules sélectionnés jusqu'à ce que les concentrations (C) en polluants dans la zone ciblée soient inférieures à la valeur de consigne (Cmax) considérée comme admissible.

Phase 6 : Enregistrement des valeurs de [Q x C x T] où Q est le débit d'air aspiré de l'extérieur de véhicules, C la concentration en polluants dans l'air extérieur et T le temps.

Phase 7 : calcul de la quantité de polluants traités (Ms) par les véhicules stationnés et de la quantité de polluants cumulée (Mt) à partir de la quantité de polluants traitée par le véhicule en mode roulage (Mr) ; [Mt = Ms + Mr].

Phase 8 : quand Mt = y% Mmax ; Mmax étant la quantité de polluants correspondant à la saturation des moyens d'épuration (charge maximale du filtre ou niveau de colmatage du catalyseur).

Phases 9A ou 9B : alarme éventuelle et remplacement du filtre ou régénération du système catalytique.

Une variante du procédé de l'invention vise à limiter ou à encadrer la durée de fonctionnement des moyens d'épuration car ceux-ci sont susceptibles de générer des nuisances sonores préjudiciables en milieu urbain confiné. L'invention peut ainsi prévoir de stopper le fonctionnement des moyens d'épuration embarqués en période nocturne (par exemple entre 22h30 et 6h00) tout en gérant le nombre de véhicules à solliciter en fonction, à la fois, des concentrations en polluants atteintes et du niveau de bruit généré.

## Revendications

1. Utilisation d'un véhicule à moteur électrique ou hybride pour le traitement de l'air ambiant, ledit véhicule étant équipé de moyens d'épuration destinés à séparer les polluants par filtration et/ou adsorption et/ou catalyse de l'air extérieur introduit dans l'habitacle **caractérisée en ce qu'**on détecte, à partir d'un centre de contrôle, une zone urbaine où le niveau de pollution (C) est supérieur ou égal à une valeur de consigne (Cmax) et la présence stationnaire dans cette zone dudit véhicule, on active à distance ses moyens d'épuration embarqués puis on effectue le pilotage desdits moyens et l'analyse de leurs performances en fonction du temps.

2. Utilisation d'un véhicule à moteur hybride pour le traitement de l'air ambiant, ledit véhicule étant équipé de moyens d'épuration destinés à séparer les polluants par filtration et/ou adsorption et/ou catalyse de l'air extérieur introduit dans la ligne d'échappement des émissions du moteur thermique **caractérisée en ce qu'**on détecte, à partir d'un centre de contrôle, une zone urbaine où le niveau de pollution (C) est supérieur ou égal à une valeur de consigne (Cmax) et la présence stationnaire dans cette zone dudit véhicule, on active à distance ses moyens d'épuration embarqués puis on effectue le pilotage desdits moyens et l'analyse de leurs performances en fonction du temps.

3. Utilisation selon la revendication 1 ou la revendication 2, **caractérisée en ce qu'**on procède à l'arrêt des moyens d'épuration embarqués lorsque la concentration en polluants (C) dans l'environnement du véhicule descend en dessous de la valeur de consigne (Cmax).

4. Utilisation selon l'une des revendications précédentes, **caractérisée en ce que**, préalablement à l'activation des moyens d'épuration embarqués et pendant leur fonctionnement, on vérifie leur état d'encrassement au regard du niveau de pollution à traiter par ledit véhicule et on bloque leur lancement ou on procède à leur arrêt immédiatement dès leur saturation en polluants.

5. Utilisation selon la revendication précédente, **caractérisée en ce qu'**on déclenche une alarme lorsque le niveau d'encrassement des moyens d'épuration par filtration de l'air est supérieur ou égal à 90% de leur charge maximale (Mmax).

6. Utilisation selon la revendication 4 avec la revendication 2, **caractérisée en ce qu'**on déclenche une régénération automatique des moyens d'épuration par séparation catalytique lorsque leur niveau de colmatage (Mmax) est compris entre 50% et 90% en fonction du niveau de pollution à traiter et de leur capacité à désorber les polluants.

7. Utilisation selon l'une des revendications précédentes, **caractérisée en ce que** ledit centre de contrôle est distant et coordonne le traitement de l'air ambiant par une flotte de véhicules répartis sur plusieurs zones urbaines.

8. Utilisation selon la revendication précédente, **caractérisée en ce que** ledit centre de contrôle active les moyens d'épuration d'un nombre (N) de véhicules disponibles qui est fonction du niveau de pollution à traiter et de la quantité de polluants à séparer dans une zone urbaine ciblée et sur une durée déterminée.

9. Utilisation selon l'une des revendications 1 à 6, **caractérisée en ce que** ledit centre de contrôle est localisé dans le véhicule.

10. Utilisation selon l'une des revendications précédentes, **caractérisée en ce que** préalablement à l'activation des moyens d'épuration, on vérifie l'état de charge de la batterie du véhicule au regard de la durée de fonctionnement prévisible en fonction du niveau de pollution à traiter par ledit véhicule et on déclenche une alarme lorsque l'état de charge du véhicule est insuffisant.

11. Centre de contrôle distant ou embarqué dans un véhicule pour la gestion d'une utilisation selon l'une des revendications précédentes, **caractérisé en ce qu'**il est doté d'un calculateur et de logiciels d'exploitation aptes et destinés à déterminer la masse (Mt) de polluants accumulés par les moyens d'épuration, et donc leur niveau de saturation, en fonction de leur durée (T) de fonctionnement, des débits (Q) d'air traités, des concentrations (C) en polluants dans l'air ambiant et du ratio d'efficacité (R) de ces moyens d'épuration.

**Patentansprüche**

1. Verwendung eines Fahrzeugs mit Elektro- oder Hybridmotor zur Behandlung der Umgebungsluft, wobei das Fahrzeug mit Reinigungsmitteln ausgestattet ist, die dazu bestimmt sind, Schadstoffe durch Filtration und/oder Adsorption und/oder Katalyse der in den Fahrgastraum eingeleiteten Außenluft abzutrennen, **dadurch gekennzeichnet, dass** Von einem Kontrollzentrum aus wird ein städtischer Bereich erfasst, in dem der Verschmutzungsgrad (C) größer oder gleich einem eingestellten Wert (Cmax) ist, und bei stationärer Anwesenheit des Fahrzeugs in diesem Bereich werden seine bordeigenen Reinigungseinrichtungen aus der Ferne aktiviert und dann werden diese Mittel gesteuert und ihre Leistung als Funktion der Zeit analysiert.

2. Verwendung eines Hybrid-Kraftfahrzeugs zur Behandlung der Umgebungsluft, wobei das Fahrzeug mit Reinigungsmitteln ausgestattet ist, die dazu bestimmt sind, Schadstoffe durch Filtration und/oder Adsorption und/oder Katalyse der in die Abgasleitung eingeleiteten Außenluft von den Emissionen des Wärmemotors abzutrennen, **dadurch gekennzeichnet , dass** von einem Kontrollzentrum aus ein städtisches Gebiet erfasst wird, in dem der Verschmutzungsgrad (C) größer oder gleich einem festgelegten Wert (Cmax) ist, und die ortsfeste Präsenz des besagten Fahrzeugs in diesem Bereich, dessen Bordreinigung erfolgt Mittel werden aus der Ferne aktiviert und dann werden diese Mittel gesteuert und ihre Leistung als Funktion der Zeit analysiert.

3. Verwendung nach Anspruch 1 oder Anspruch 2, **dadurch gekennzeichnet, dass** die bordeigenen Reinigungseinrichtungen gestoppt werden, wenn die Schadstoffkonzentration (C) in der Umgebung des Fahrzeugs unter den eingestellten Wert (Cmax) fällt.

4. Verwendung nach einem der vorhergehenden Ansprüche, **dadurch gekennzeichnet, dass** vor der Aktivierung der bordeigenen Reinigungseinrichtungen und während ihres Betriebs deren Verschmutzungszustand im Hinblick auf den von dem Fahrzeug zu behandelnden Verschmutzungsgrad überprüft und blockiert wird oder sie werden sofort gestoppt, sobald sie mit Schadstoffen gesättigt sind.

5. Verwendung nach dem vorhergehenden Anspruch, **dadurch gekennzeichnet, dass** ein Alarm ausgelöst wird, wenn der Verstopfungsgrad der Luftfilter-Reinigungsmittel größer oder gleich 90 % ihrer maximalen Belastung ( Mmax ) ist.

6. Verwendung nach Anspruch 4 mit Anspruch 2, **dadurch gekennzeichnet, dass** eine automatische Regeneration der Reinigungsmittel durch katalytische Trennung ausgelöst wird, wenn ihr Verstopfungsgrad ( Mmax ) zwischen 50 % und 90 % liegt, abhängig vom Grad der zu behandelnden Verschmutzung und ihrem Fähigkeit, Schadstoffe zu desorbieren.

7. Verwendung nach einem der vorhergehenden Ansprüche, **dadurch gekennzeichnet, dass** das Kontrollzentrum entfernt ist und die Behandlung der Umgebungsluft durch eine über mehrere Stadtgebiete verteilte Fahrzeugflotte koordiniert.

8. Verwendung nach dem vorhergehenden Anspruch, **dadurch gekennzeichnet, dass** das Kontrollzentrum die Mittel zur Reinigung einer Anzahl (N) verfügbarer Fahrzeuge aktiviert, die vom Grad der zu behandelnden Verschmutzung und der Menge der in einem Zielgebiet zu trennenden Schadstoffe abhängt Stadtgebiet und über einen bestimmten Zeitraum.

9. Verwendung nach einem der Ansprüche 1 bis 6, **dadurch gekennzeichnet, dass** sich die Steuerzentrale im Fahrzeug befindet.

10. Verwendung nach einem der vorhergehenden Ansprüche, **dadurch gekennzeichnet, dass** vor der Aktivierung des Reinigungsmittels der Ladezustand der Fahrzeugbatterie im Hinblick auf die zu erwartende Betriebsdauer in Abhängigkeit vom zu verarbeitenden Verschmutzungsgrad des Fahrzeugs überprüft wird und Bei unzureichendem Ladezustand des Fahrzeugs wird ein Alarm ausgelöst.

11. Fernsteuerzentrale oder eingebettet in ein Fahrzeug zur Verwaltung einer Nutzung nach einem der vorhergehenden Ansprüche, **dadurch gekennzeichnet, dass** sie mit einem Computer und einer Betriebssoftware ausgestattet ist, die in der Lage und dazu bestimmt ist, die Masse (Mt) der von den Reinigungsmitteln angesammelten Schadstoffe zu bestimmen, und damit ihr Sättigungsgrad, abhängig von ihrer Betriebsdauer (T), den Durchflussmengen (Q) der behandelten Luft, den Schadstoffkonzentrationen (C) in der Umgebungsluft und dem Wirkungsgrad (R) dieser Reinigungseinrichtungen.

**Claims**

1. Use of a vehicle with an electric or hybrid motor for the treatment of ambient air, said vehicle being equipped with purification means intended to separate pollutants by filtration and/or adsorption and/or catalysis of the outside air introduced into the passenger compartment **characterized in that** an urban zone is detected, from a control center, where the pollution level (C) is greater than or equal to a set value (Cmax) and the stationary presence in this zone of said vehicle, its on-board purification means are remotely activated and then said means are controlled and their performance analyzed as a function of time.

2. Use of a hybrid motor vehicle for the treatment of ambient air, said vehicle being equipped with purification means intended to separate pollutants by filtration and/or adsorption and/or catalysis of the outside air introduced into the line exhaust of emissions from the thermal engine **characterized in that** an urban zone is detected, from a control center, where the pollution level (C) is greater than or equal to a set value (Cmax) and the stationary presence in this area of said vehicle, its on-board purification means are remotely activated and then said means are controlled and their performance analyzed as a function of time.

3. Use according to claim 1 or claim 2, **characterized in that** the on-board purification means are stopped when the concentration of pollutants (C) in the environment of the vehicle falls below the set value ( Cmax).

4. Use according to one of the preceding claims, **characterized in that**, prior to activation of the on-board purification means and during their operation, their state of contamination is checked with regard to the level of pollution to be treated by said vehicle and we blocks their launch or they are stopped immediately as soon as they become saturated with pollutants.

5. Use according to the preceding claim, **characterized in that** an alarm is triggered when the level of clogging of the air filtration purification means is greater than or equal to 90% of their maximum load ( Mmax ).

6. Use according to claim 4 with claim 2, **characterized in that** an automatic regeneration of the purification means by catalytic separation is triggered when their level of clogging ( Mmax ) is between 50% and 90% depending on the level of pollution to be treated and their capacity to desorb pollutants.

7. Use according to one of the preceding claims, **characterized in that** said control center is remote and coordinates the treatment of ambient air by a fleet of vehicles distributed over several urban areas.

8. Use according to the preceding claim, **characterized in that** said control center activates the means for purifying a number (N) of available vehicles which is a function of the level of pollution to be treated and the quantity of pollutants to be separated in an area targeted urban area and over a specific period of time.

9. Use according to one of claims 1 to 6, **characterized in that** said control center is located in the vehicle.

10. Use according to one of the preceding claims, **characterized in that** prior to activation of the purification means, the state of charge of the vehicle battery is checked with regard to the expected operating time depending on the level of pollution to be processed by said vehicle and an alarm is triggered when the state of charge of the vehicle is insufficient.

11. Remote control center or embedded in a vehicle for managing a use according to one of the preceding claims, **characterized in that** it is equipped with a computer and operating software capable and intended to determine the mass ( Mt) of pollutants accumulated by the purification means, and therefore their saturation level, depending on their duration (T) of operation, the flow rates (Q) of air treated, the concentrations (C) of pollutants in the ambient air and the efficiency ratio (R) of these purification means.

[Fig. 1]

```
┌─────────────────────┐        ┌─────────────────────┐
│         1A          │        │         1B          │
│     C > Cmax        │        │     N = % Nt        │
└─────────────────────┘        └─────────────────────┘
          ╲         ╲         ╱         ╱
           ╲         ╲       ╱         ╱
            ╲          ╲   ╱          ╱
             ╲          ╳           ╱
              ╲       ╱   ╲        ╱
┌─────────────────────┐        ┌─────────────────────┐
│         2A          │        │         2B          │
└─────────────────────┘        └─────────────────────┘
           │                            │
┌─────────────────────┐        ┌─────────────────────┐
│         3A          │        │         3B          │
└─────────────────────┘        └─────────────────────┘
           │                            │
        ┌──────────────────────────────────┐
        │                4                 │
        └──────────────────────────────────┘
                        │
        ┌──────────────────────────────────┐
        │    C ⤳      5                    │
        │                  → C < Cmax      │
        └──────────────────────────────────┘
                        │
        ┌──────────────────────────────────┐
        │                6                 │
        │             QxCxT                │
        └──────────────────────────────────┘
                        │
        ┌──────────────────────────────────┐
        │                7                 │
        │         Mt = Ms + Mr             │
        └──────────────────────────────────┘
                        │
        ┌──────────────────────────────────┐
        │                8                 │
        │         Mt = y%Mmax              │
        └──────────────────────────────────┘
           │                            │
┌─────────────────────┐        ┌─────────────────────┐
│     9A     ☆        │        │    ☆      9B        │
└─────────────────────┘        └─────────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 707989 A1
- EP 3484194 A2
- WO 2019137822 A3

**Littérature non-brevet citée dans la description**

- Hyundai nexo cleans over 900kg of air during clean driving month. Hyundai News Release. l'University College London, 12 Novembre 2018